# EUROPÄISCHE PATENTSCHRIFT

(11) **EP 2 789 641 B1**
(45) Veröffentlichungstag und Bekanntmachung des Hinweises auf die Patenterteilung: **11.03.2020**
(21) Anmeldenummer: 14170929.5
(22) Anmeldetag: 06.10.2011
(51) Int. Cl.: C08G 69/18

(54) **Verfahren zur Herstellung von Monomer-Zusammensetzungen und deren Verwendung zur Herstellung eines Polyamid-Formteils**
Method for the preparation of monomer compositions, and use thereof for producing a moulded polyamide part
Procédé de fabrication de compositions monomères et leur utilisation destinée à fabriquer un élément de formage en polyamide

(30) Priorität: 07.10.2010 EP 10186840; 14.12.2010 EP 10194982
(43) Veröffentlichungstag der Anmeldung: 15.10.2014
(62) Teilanmeldung aus: 11764573.9
(73) Patentinhaber: BASF SE, 67056 Ludwigshafen am Rhein (DE)
(72) Erfinder: Desbois, Philippe, 68535 Edingen-Neckarhausen (DE); Scherzer, Dietrich, 67433 Neustadt (DE); Wollny, Andreas, 67251 Freinsheim (DE); Radtke, Andreas, 68161 Mannheim (DE); Wilms, Axel, 67227 Frankenthal (DE); Klatt, Martin, 68165 Mannheim (DE); Warzelhan, Volker, 67273 Weisenheim am Berg (DE)
(74) Vertreter: BASF IP Association

(56) Entgegenhaltungen:
- EP-A1- 0 872 508
- EP-A2- 0 786 486

## Beschreibung

Die vorliegende Beschreibung betrifft ein Verfahren zur Herstellung einer aktivierten Monomer-Zusammensetzung enthaltend ein Lactam und/oder Lacton, einen Katalysator und einen Aktivator. Die mit dem beschriebenen Verfahren hergestellte Monomerzusammensetzung ist zunächst gegenüber der Polymerisation stabil und kann zu einem späteren Zeitpunkt zur Polymerisation eingesetzt werden.

Die vorliegende Erfindung betrifft ein Verfahren zur Herstellung eines Gusspolyamid-Formteils, durch ringöffnende, anionische Polymerisation unter Verwendung einer aktivierten Monomer-Zusammensetzung.

Polyamid-Formteile, insbesondere faserverstärkte Polyamid-Formteile, werden in den letzten Jahren vermehrt als Werkstoffe im Ersatz für metallische Werkstoffe beispielsweise im Automobilbau eingesetzt und können sowohl Teile im Antriebsstrang (Powertrain) als auch Karosserieteile aus Metall ersetzen. Es ist dabei oftmals vorteilhaft, bei der Herstellung eines Polyamid-Formteils die Form mit einer Monomerschmelze anstatt mit einer Polymerschmelze zu füllen. Aufgrund der niedrigeren Viskosität können z. B. im Falle eines gefüllten oder faserverstärkten Formteils höhere Füllgrade realisiert werden.

Lactame, wie beispielsweise Caprolactam, Lauryllactam, Piperidon und Pyrrolidon, aber auch Lactone, wie Caprolacton, können in einer basenkatalysierten anionischen Polymerisationsreaktion ringöffnend polymerisiert werden. Hierzu wird in der Regel eine Schmelze aus Lactam und/oder Lacton enthaltend einen alkalischen Katalysator und einen so genannten Aktivator (auch Co-Katalysator oder Initiator) bei Temperaturen von etwa 150°C polymerisiert.

Die übliche, bekannte, aktivierte anionische Polymerisation von Lactamen zu Polyamiden wird in technischem Maßstab bevorzugt so durchgeführt, dass man einerseits eine Lösung von Katalysator in Lactam und andererseits eine Lösung von Aktivator in Lactam herstellt. Beide Lösungen sind bevorzugt so zusammengesetzt, dass ein Mischen im gleichen Verhältnis die gewünschte Gesamtrezeptur ergibt.

So beschreibt DE-A 1 420 241 eine anionische Polymerisation von Lactamen in Gegenwart von Kaliumhydroxid als Katalysator und unter Verwendung von 1,6-Bis-(N,N-dibutylureido)-hexan als Aktivator.

Eine aktivierte anionische Lactam-Polymerisation unter Verwendung von Natrium-Caprolactam wird beispielweise in Polyamide, Kunststoff Handbuch, Vol. 3/4, ISBN 3-446-16486-3, 1998, Carl Hanser Verlag, S.49-52 und Macromolecules, Vol. 32, No.23 (1993), S. 7726 beschrieben. Weiterer Stand der Technik wird auch in DE-A 10 2008 000 352 beschrieben.

Die Dokument EP 0 872 508 und EP 0 786 486 beschreiben flüssige Mehrkomponentensysteme zur Durchführung der anionischen Lactampolymerisation, wobei die Mehrkomponentensysteme zugleich Aktivator und anionischen Katalysator für die Lactampolymerisation enthalten.

Wie bereits im Stand der Technik beschrieben, kann die anionische Polymerisation von Lactamen und Lactonen in einem Reaktionsformgieß- oder Reaktionsspritzgieß-Prozess erfolgen, wobei der Katalysator und weitere Additive während des Polymerisationprozesses der Lactam- und/oder Lactonschmelze zugegeben werden. Die Verfahren nach dem Stand der Technik zeigen den Nachteil, dass der Verarbeiter vor dem Befüllen der Gieß- oder Mischapparatur jedes Mal aufwendig unter absolutem Wasserausschluss definierte Mengen an Katalysator, Aktivator oder anderen Additiven in aufgeschmolzenes Lactam, z.B. Caprolactam, einrühren muss.

Da die anionische Polymerisation von Lactamen und Lactonen unter Ausschluss von Sauerstoff, Kohlendioxid und Wasser erfolgen muss, um einen vorzeitigen Abbruch der Polymerisation zu vermeiden, bedeutet die Durchführung einer Polymerisation in einem Reaktionsformgieß- oder Reaktionsspritzgieß-Prozess einen erheblichen technischen Aufwand.

Es wäre daher im Hinblick auf die Verfahrensökonomie von Vorteil, wenn für die Herstellung von Polyamid-Formteilen eine Zusammensetzung verwendet werden könnte, welche das Lactam- und/oder Lacton-Monomer, den Katalysator und den Aktivator sowie gegebenenfalls weitere Additive bereits enthält, und welche direkt in der Form beispielsweise durch Erhöhen der Temperatur polymerisiert werden könnte.

Die vorliegende Beschreibung betrifft ein Verfahren zur Herstellung einer Monomer-Zusammensetzung enthaltend Lactame und/oder Lactone, die als solche ohne weitere Zugabe von Katalysatoren und/oder Aktivatoren polymerisiert werden kann. Zudem besteht eine Aufgabe der vorliegenden Erfindung darin, ein Verfahren zur Herstellung eines Polyamid-Formteil bereitzustellen, welches einfach und kostengünstig unter Verwendung von gängigen, einfachen Formgebungsverfahren durchzuführen ist, und mit dem Polyamid-Formteile von hoher Qualität und mit einem niedrigen Gehalt an Restmonomer erhalten werden können.

Eine weitere Aufgabe der vorliegenden Erfindung besteht darin ein einfaches Verfahren bereitzustellen, das zu Gusspolyamid-Formteilen mit verbesserter Qualität führt.

Zudem sollte der Gehalt an Monomeren im Endprodukt möglichst gering sein, was sich z. B. in einem geringeren Geruch äußert. Außerdem sollte eine möglichst einfache Verarbeitung erreicht werden. Das Verfahren sollte beispielsweise unter Verwendung von standardisierten, preisgünstigen Verarbeitungsmaschinen durchzuführen sein.

Wie im Stand der Technik beschrieben, erfolgt die anionische Polymerisation von Lactamen, insbesondere infolge der Zugabe eines Aktivators (zum Beispiel eines Isocyanats, Säurehalogenids oder Säureanhydrids), sehr schnell (Schnellpolymerisation) und schon bei sehr tiefen Temperaturen nahe den Schmelztemperaturen der entsprechenden Lactame.

Es wurde überraschend gefunden, dass sich stabile Monomer-Zusammensetzungen herstellen lassen, welche neben dem Lactam- und/oder Lacton-Monomer einen Initiator und einen Katalysator enthalten. Diese Monomer-Zusammensetzungen sind zunächst gegenüber einer Polymerisation stabil. Beispielsweise kann eine solche Monomer-Zusammensetzung durch Aufschmelzen und Abkühlen der Komponenten erhalten werden, wobei insbesondere eine schnelle Kristallisation der Monomere (Lactam und/oder Lacton) entscheidend ist. Diese Monomer-Zusammensetzungen können über mehrere Monate gelagert und zu einem späteren Zeitpunkt für die Polyamidherstellung eingesetzt werden. Die Polymerisation einer solchen Monomerzusammensetzung kann durch Anwendung einfacher Verfahren wie zum Beispiel Spritzguss oder Gießverfahren insbesondere bei Temperaturen im Bereich von 150 bis 200°C erfolgen.

Die vorliegende Beschreibung betrifft ein Verfahren zur Herstellung einer Zusammensetzung (C) enthaltend die folgenden Komponenten
i) mindestens ein Monomer (M) ausgewählt aus Lactamen und Lactonen;
ii) mindestens einen Katalysator (K);
iii) mindestens einen Aktivator (A);
umfassend die folgenden Schritte
a) Vermischen der Komponenten (M), (K) und (A) und ggf. weiterer Komponenten bei einer Temperatur von 50 bis 200°C, insbesondere von 50 °C bis 160 °C, bevorzugt von 50 °C bis 100 °C;
b) Abkühlen der unter Schritt a) erhaltenen Mischung auf eine Temperatur von 0 °C bis 60 °C, bevorzugt 0°C bis 35°C, insbesondere bevorzugt 0 °C bis 25 °C;
c) optional Granulieren der abgekühlten Mischung.

Die mittels des beschriebenen Verfahrens erhaltene Monomer-Zusammensetzung stellt ein wertvolles Zwischenprodukt dar, welches als solches gelagert, transportiert und gehandelt werden kann, zum Beispiel in Form von Pulver, Granulat oder Kapseln. Diese fertig gemischte feste Monomerzusammensetzung zeichnet sich durch eine einfache Handhabung aus. Zudem ist zur Verarbeitung (Polymerisation) kein aufwändiges Reaktiv-Polymerisationsverfahren umfassend zwei Komponenten, wie zum Beispiel RTM (Reaction Transfer Molding) oder RIM (Reaction Injection Molding), notwendig.

Aufgrund der geringen Viskosität der eingesetzten Monomerzusammensetzung bei den Verarbeitungstemperaturen (Monomerschmelze) kann eine sehr gute Durchdringung von in der Form vorhandenen Matrixmaterialien (zum Beispiel Füllstoffen oder Fasermatten) erreicht werden. Somit kann das mittels des beschriebenen Verfahrens hergestellte Polyamidteil einen sehr hohen Füll- bzw. Faserstoffgehalt von etwa 50 bis 90 Gew.-% aufweisen.

Generell ist es vorteilhaft, Verunreinigungen, wie z.B. Wasser, Kohlendioxid und Sauerstoff, in der Zusammensetzung (C) so gering wie möglich zu halten. Daher sollten insbesondere alle eingesetzten Komponenten trocken und frei von Sauerstoff und Kohlendioxid sein, bzw. möglichst geringe Mengen davon enthalten. Bevorzugt erfolgt die Vermischung der Komponenten (M), (K) und (A) (und ggf. weiterer Komponenten) unter einer Inertgas-Atmosphäre (z.B. unter Stickstoff). Insbesondere werden die Schritte a) bis c) unter weitgehendem Ausschluss von Sauerstoff, Kohlendioxid und Wasser durchgeführt.

Das Vermischen der Komponenten in Schritt a) erfolgt bevorzugt bei einer Temperatur größer oder gleich der Schmelztemperatur des eingesetzten Monomers (M) bzw. der eingesetzten Monomere (M) und unter einer Temperatur von 200 °C, bevorzugt unter 160 °C, bevorzugt unter 120 °C, insbesondere bevorzugt unter 100 °C. Weiterhin bevorzugt ist eine Temperatur unter 90 °C. Der ausgewählte Temperaturbereich in Schritt a) hängt auch von der Auswahl des Monomers (M) bzw. der Monomere (M) ab.

Das Vermischen der Komponenten in Schritt a) kann in einem diskontinuierlichen oder kontinuierlichen Verfahren in dem Fachmann bekannten und geeigneten Vorrichtungen erfolgen. Das Vermischen der Komponenten in Schritt a) kann beispielsweise kontinuierlich und/oder diskontinuierlich in einem Rührkessel erfolgen. Das Vermischen der Komponenten in Schritt a) kann beispielsweise kontinuierlich in einem Extruder erfolgen.

Nach dem Vermischen der Komponenten in Schritt a) erfolgt bevorzugt ein möglichst rasches Abkühlen der Monomerschmelze (rasche Kristallisation des Monomers). Insbesondere erfolgt das Abkühlen der Mischung in Schritt b) auf eine Temperatur von 0 °C bis 60°C, bevorzugt von 0 °C bis 35 °C, besonders bevorzugt 0 °C bis 25 °C innerhalb eines Zeitraums von 1 Sekunde bis 5 Minuten, bevorzugt im Bereich von 1 bis 60 Sekunden. Das Abkühlen der unter Schritt a) erhaltenen Mischung kann insbesondere durch einen kalten Gasstrom (z.B. einem Stickstoffgasstrom von 0 °C) oder ein so genanntes "Cold-Disk-Verfahren" erfolgen.

Als Lactame eignen sich insbesondere Caprolactam, Piperidon, Pyrrolidon, Lauryllactam oder deren Mischungen, bevorzugt Caprolactam, Lauryllactam oder deren Mischungen. Besonders bevorzugt wird als Monomer (M) Caprolactam oder Lauryllactam eingesetzt. Weiterhin ist es möglich als Monomer ein Lacton oder eine Mischung von Lactam und Lacton einzusetzen. Als Lactone können beispielsweise Caprolacton oder Butyrolacton eingesetzt werden. Bevorzugt übersteigt die Menge an Lacton als Comonomer dabei 40 Gew.-% bezogen auf das Gesamtmonomer nicht. Bevorzugt beträgt der Anteil an Lacton als Comonomer nicht mehr als 10 Gew.-% bezogen auf das Gesamtmonomer. In einer bevorzugten Ausführungsform werden ausschließlich Lactame als Monomere (M) verwendet. Soweit nichts anderes angegeben ist, beziehen sich die Angaben in Gew.-% auf die Gesamtmenge der Zusammensetzung.

Insbesondere wird als Monomer (M) mindestens ein Monomer eingesetzt ausgewählt aus der Gruppe bestehend aus Caprolactam, Piperidon, Pyrrolidon, Lauryllactam und Caprolacton.

In einer bevorzugten Ausführungsform enthält die Zusammensetzung (C) Caprolactam (insbesondere als einziges Monomer (M)) und das Vermischen der Komponenten in Schritt a) erfolgt bei einer Temperatur von 70 °C bis 160 °C, bevorzugt von 70 °C bis 120 °C, insbesondere bevorzugt von 70 °C bis 100 °C, weiterhin bevorzugt von 70 °C bis 90 °C.

In einer bevorzugten Ausführungsform enthält die Zusammensetzung (C) Lauryllactam (insbesondere als einziges Monomer (M)) und das Vermischen der Komponenten in Schritt a) erfolgt bei einer Temperatur von 150 °C bis 200, insbesondere von 150 °C bis 160 °C.

In dem erfindungsgemäßen Verfahren wird bevorzugt ein Katalysator (K) eingesetzt, welcher einen gängigen Katalysator für die anionische Polymerisation darstellt. Unter einem Katalysator für die anionische Polymerisation wird im Rahmen der vorliegenden Erfindung eine Verbindung verstanden, welche die Bildung von Lactam-Anionen ermöglicht. Lactam-Anionen an sich können ebenfalls als Katalysator fungieren.

Derartige Katalysatoren sind beispielsweise aus Polyamide, Kunststoffhandbuch, 1998, Carl Hanser Verlag bekannt. Im Rahmen der vorliegenden Erfindung wird bevorzugt ein Katalysator ausgewählt aus der Gruppe bestehend aus Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat und Kaliumbutanolat, bevorzugt bestehend aus Natriumcaprolactamat, Kaliumcaprolactamat, Bromid-Magnesiumcaprolactamat, Chloridmagnesium-caprolactamat, Magnesiumbiscaprolactamat, Natriumhydrid, Natrium, Natriumhydroxid, Natriumethanolat, Natriummethanolat, Natriumpropanolat, Natriumbutanolat, Kaliumhydrid, Kalium, Kaliumhydroxid, Kaliummethanolat, Kaliumethanolat, Kaliumpropanolat und Kaliumbutanolat.

Besonders bevorzugt wird ein Katalysator (K) eingesetzt ausgewählt aus der Gruppe bestehend aus Natriumhydrid, Natrium und Natriumcaprolactamat; besonders bevorzugt ist der Einsatz von Natriumcaprolactamat und/oder eine Lösung von Natriumcaprolactamat in Caprolactam (z. B. Bruggolen® (BASF, DE) C100; 18 Gew.-% Natriumcaprolactamat in Caprolactam).

Das Molverhältnis von Monomer (M) zu Katalysator (K) kann in weiten Grenzen variiert werden, es beträgt in der Regel von 1 : 1 bis 10.000 : 1, bevorzugt von 10 : 1 bis 1.000 : 1, besonders bevorzugt von 20 : 1 bis 300 : 1.

In der Zusammensetzung (C), welche gemäß dem beschriebenen Verfahren hergestellt wird, ist insbesondere mindestens ein Aktivator (A) für die anionische Polymerisation enthalten.

Unter einem Aktivator für die anionische Polymerisation wird im Rahmen dieser Erfindung ein durch elektrophile Reste N-substituiertes Lactam (zum Beispiel ein Acyllactam) verstanden. Als Aktivator (A) können auch Vorstufen für solche aktivierten N-substituierten Lactame verstanden werden, welche zusammen mit dem Monomer (M) in situ ein aktiviertes Lactam bilden. Die Aktivatormenge definiert typischerweise die Anzahl der wachsenden Ketten, da jedes Aktivatormolekül das Anfangsglied einer Polymerkette darstellt. Als Aktivator (A) eignen sich generell Isocyanate, Säureanhydride und Säurehalogenide bzw. deren Umsetzungsprodukte mit dem Monomer (M).

Als Aktivatoren (A) eignen sich aliphatische Diisocyanate, wie Butylendiisocyanat, Hexamethylendiisocyanat, Octamethylendiisocyanat, Decamethylendiisocyanat, Undecamethylendiisocyanat, Dodecamethylendiisocyanat, 4,4'-Methylenbis (cyclohexylisocyanat), aromatische Diisocyanate, wie Toluyldiisocyanat, Isophorondiisocyanat, 4,4'-Methylenbis(phenyl)isocyanat oder Polyisocyanate (zum Beispiel Isocyanate von Hexamethylendiisocyanat; Basonat HI 100/BASF SE), Allophanate (zum Beispiel Ethylallophanat). Insbesondere können Mischungen der genannten Verbindungen als Aktivator (A) eingesetzt werden.

Als Aktivatoren (A) eignen sich weiterhin aliphatische Disäurehalogenide, wie Butylendisäurechlorid, Butylen-disäurebromid, Hexamethylen-disäurechlorid, Hexamethylendisäurebromid, Octamethylen-disäurechlorid, Octamethylen-disäurebromid, Decamethylen-disäurechlorid, Decamethylen-disäurebromid, Dodecamethylen-disäurechlorid, Dodecamethylen-disäurebromid, 4,4'-Methylen-bis-(cyclohexylsäurechlorid), 4,4'-Methylenbis (cyclohexylsäurebromid); als auch aromatische Disäurehalogenide, wie Toluylmethylendisäurechlorid, Toluylmethylen-disäurebromid, Isophorondisäurechlorid, Isophoron-disäurebromid, 4,4'-Methylenbis(phenyl)säurechlorid, 4,4'-Methylenbis(phenyl)säurebromid. Insbesondere können Mischungen der genannten Verbindungen als Aktivator (A) eingesetzt werden.

Insbesondere bevorzugt ist ein Verfahren, dadurch gekennzeichnet, dass als Aktivator (A) mindestens eine Verbindung eingesetzt wird ausgewählt aus der Gruppe bestehend aus aliphatischen Diisocyanaten, aromatischen Diisocyanaten, Polyisocyanaten, aliphatischen Disäurehalogeniden und aromatischen Disäurehalogeniden.

In einer bevorzugten Ausführungsform wird als Aktivator (A) mindestens eine Verbindung ausgewählt aus Hexamethylendiisocyanat, Isophorondiisocyanat, Hexamethylendisäurebromid, Hexamethylen-disäurechlorid; besonders bevorzugt Hexamethylendiisocyanat eingesetzt.

Als Aktivator (A) kann sowohl die Reinsubstanz wie oben beschrieben oder aber bevorzugt eine Lösung des Aktivators in einem Lösungsmittel, beispielsweise in N-Methylpyrrolidon, dienen.

Das Molverhältnis von Monomer (M) zu Aktivator (A) kann in weiten Grenzen variiert werden und beträgt in der Regel von 1 : 1 bis 10.000 : 1, bevorzugt von 10 : 1 bis 2.000 : 1, besonders bevorzugt von 20 : 1 bis 1.000 : 1.

Insbesondere betrifft die vorliegende Beschreibung ein Verfahren wie oben beschrieben, dadurch gekennzeichnet, dass die Zusammensetzung (C) mindestens eine weitere Komponente enthält, ausgewählt aus Füll- und/oder Verstärkungsstoffen (F), Polymeren (P) und weiteren Zusatzstoffen (Z).

Die Zugabe dieser zusätzlichen Komponenten kann zu jeden Schritt des Herstellungsprozesses der Zusammensetzung (C) erfolgen, beispielsweise vor oder zusammen mit der Zugabe an Katalysator (K) und/oder Aktivator (A).

Die Zusammensetzung (C) kann ein oder mehrere Polymere (P) enthalten. Die Zusammensetzung (C) kann beispielsweise ein Polymer und/oder Oligomer enthalten, welches sich in-situ durch Polymerisation der in der Zusammensetzung enthaltenen Monomere bildet. Dieses optional enthaltene Polymer (P) ist beispielsweise in einer Menge von 0 bis 40 Gew.-%, bevorzugt von 0 bis 20 Gew.-%, besonders bevorzugt in einer Menge von 0 bis 10 Gew.-% enthalten.

Darüber hinaus kann die Zusammensetzung (C) ein oder mehrere Polymere (P) enthalten, welche in Form eines Polymers zu der Zusammensetzung zugegeben werden. Dieses zugegebene Polymer kann beispielsweise Gruppen enthalten, die zur Bildung von Block- und/oder Pfropf-Copolymeren mit dem aus den Monomeren (M) gebildeten Polymeren, geeignet sind. Beispiele für solche Gruppen sind Epoxy-, Amin-, Carboxyl-, Anhydrid-, Oxazolin-, Carbodiimid-, Urethan-, Isocyanat- und Lactam-Gruppen.

Zudem besteht die Möglichkeit zur Verbesserung der Produkteigenschaften, Verträglichkeiten der Komponenten und Viskosität der Zusammensetzung (C) mindestens ein Polymer (P) zuzugeben ausgewählt aus der Gruppe bestehend aus Polystyrol, StyrolCopolymerisate, wie zum Beispiel Styrol-Acrylnitril-Copolymere (SAN), AcrylnitrilButadien-Styrol-Copolymere (ABS) oder Styrol-Butadien-Copolymere (SB), Polyphenylenoxidether, Polyolefine, wie zum Beispiel Polyethylen (HTPE (high-temperature-polyethylene), LTPE (low-temperature-polyethylene)), Polypropylen oder Polybuten-1, Polytetrafluoroethylen; Polyester, wie zum Beispiel Polyethylenterephthalat (PET); Polyamide; Polyether, wie zum Beispiel Polyethylenglykol (PEG), Polypropylenglykol oder Polyethersulfone (PESU oder PES); Polymere aus Vinylgruppen enthalten Monomeren, wie zum Beispiel Polyvinylchlorid, Polyvinylidenchloride, Polystyrol, schlagzäh-modifiziertes Polystyrol, Polyvinylcarbazol, Polyvinylacetat oder Polyvinylalkohol; Polyisobutylene, Polybutadien und Polysulfone. Es ist weiterhin die Verwendung von Copolymeren als Polymer (P) möglich, die aus den Monomereinheiten der oben genannten Polymere bestehen.

Die Zugabe von Polymeren kann in jedem Schritt des Herstellungsprozesses der Zusammensetzung (C) erfolgen, beispielsweise vor oder zusammen mit der Zugabe an Katalysator (K) und/ oder Aktivator (A). Die Zugabe von Polymer kann insbesondere der Einstellung der Viskosität der Zusammensetzung (C) dienen. Das Polymer (P) kann beispielsweise im Monomer gelöst oder dispergiert vorliegen.

Für den Fall, dass das Polymer/die Polymere (P) im Monomer gelöst vorliegen, beträgt der Anteil Polymer (P) an der Zusammensetzung (C) bevorzugt weniger als 40 Gew.-%. Für den Fall, dass das Polymer/die Polymere im Monomer dispergiert vorliegen, beträgt der Anteil Polymer (P) an der Zusammensetzung (C) bevorzugt weniger als 60 Gew.-%.

Die Zusammensetzung (C) kann zudem ein vernetzendes Monomer enthalten. Ein vernetzendes Monomer kann eine Verbindung darstellen, die mehr als eine Gruppe enthält, welche mit dem Monomer (M) copolymerisiert werden kann. Beispiele für solche Gruppen sind Epoxy-, Amin-, Carboxyl-, Anhydrid-, Oxazolin-, Carbodiimid-, Urethan-, Isocyanat- und Lactan-Gruppen. Als vernetzende Monomere eignen sich beispielsweise aminosubstituierte Lactame wie Aminocaprolactam, Aminopiperidon, Aminopyrrolidon, Aminolauryllactam oder deren Mischungen, bevorzugt Aminocaprolactam, Aminopyrrolidon oder deren Mischungen, besonders bevorzugt Aminocaprolactam.

In einer bevorzugten Ausführungsform enthält die Zusammensetzung (C) mindestens einen Füll- und/oder Verstärkungsstoff (F). Als Füll- und/oder Verstärkungsstoffe (F) kommen organische oder anorganische Füll- und/oder Verstärkungsstoffe (F) in Frage. Beispielsweise können anorganische Füllstoffe, wie Kaolin, Kreide, Wollastonit, Talkum, Calciumcarbonat, Silikate, Titandioxid, Zinkoxid, Graphit, Graphene, Glaspartikel, (z.B. Glaskugeln), nanoskalige Füllstoffe, (wie Kohlenstoff-Nanoröhren carbonanotubes), carbon black, Schichtsilikate, nanoskalige Schichtsilikate, nanoskaliges Aluminiumoxid (Al₂O₃), nanoskaliges Titandioxid (TiO₂) und nanoskaliges Siliciumdioxid (SiO₂), eingesetzt werden.

Weiterhin bevorzugt ist der Einsatz von Faserstoffe als Füll- und/oder Verstärkungsstoff (F). Die Füll- und/oder Verstärkungsstoffe (F) werden in der Regel ausgewählt aus der Gruppe umfassend Mineralien in für Thermoplastanwendungen üblicher Korngröße wie beispielsweise Kaolin, Kreide, Wollastonit oder Talkum, Kohlenstoff- oder Glasfasern, z. B. gemahlene Glasfasern und auch textile Strukturen (Gewebe und Gelege) aus unidirektionalen Fasern, bevorzugt Glas- und Kohlenstofffasern. Als Schlichte für die Füll- oder Verstärkungsstoffe kann die gleiche Schlichte wie für den Einsatz im thermoplastisch zu verarbeitenden Polyamid verwendet werden.

Beispielsweise können ein oder mehrere Faserstoffe zum Einsatz kommen, ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern; und Naturfasern, wie Holzfasern, Flachsfasern, Hanffasern und Sisalfasern. Insbesondere bevorzugt ist der Einsatz von Glasfasern, insbesondere Schnittglasfasern, Kohlenstofffasern, Aramidfasern, Borfasern, Metallfasern oder Kaliumtitanatfasern.

Die genannten Fasern können in Form von Kurzfasern, Langfasern oder als Gemisch von Kurz- und Langfasern eingesetzt werden. Hierbei weisen die Kurzfasern vorzugsweise eine mittlere Faserlänge im Bereich von 0,1 bis 1 mm auf. Weiterhin bevorzugt sind Fasern mit einer mittleren Faserlänge im Bereich von 0,5 bis 1 mm. Die eingesetzten Langfasern weisen vorzugsweise eine mittlere Faserlänge von über 1 mm, bevorzugt im Bereich von 1 bis 50 mm auf.

Insbesondere können auch Mischungen der genannten Füll- und/oder Verstärkungsstoffe (F) eingesetzt werden. Besonders bevorzugt werden als Füll- und/oder Verstärkungsstoff (F) Glasfasern und/oder Glaspartikel, insbesondere Glaskugeln, ausgewählt.

Die im oben beschriebenen Verfahren hergestellte Zusammensetzung (C) enthält bevorzugt 30 bis 90 Gew.-%, insbesondere von 30 bis 80 Gew.-%, bevorzugt 30 bis 50 Gew.-%, weiterhin bevorzugt von 50 bis 90 Gew.-% an mindestens einem Füll- und/oder Verstärkungsstoff (F).

In einer bevorzugten Ausführungsform kann die Zusammensetzung (C) weitere Zusatzstoffe (Z) enthalten. Bevorzugt sind die Zusatzstoffe (Z) in einer Menge von 0 bis 5 Gew.-%, bevorzugt von 0 bis 4 Gew.-%, besonders bevorzugt von 0 bis 3,5 Gew.-% in der Zusammensetzung enthalten. Als Zusatzstoffe (Z) können beispielsweise Stabilisatoren, wie Kupfersalze, Farbstoffe, Antistatika, Füllöle, Stabilisatoren, Oberflächenverbesserer, Sikkative, Entformungs-Hilfsmittel, Trennmittel, Antioxidantien, Lichtstabilisatoren, PVC-Stabilisatoren, Gleitmittel, Flammschutzmittel, Treibmittel, Schlagzähmodifikatoren und Nukleierungshilfsmittel zugesetzt werden.

Bevorzugt enthält die Zusammensetzung (C) als Zusatzstoff (Z) einen Schlagzähigkeitsverbesserer, insbesondere einen Polydien-Polymer (z.B. Polybutadien, Polyisopren) enthaltend Anhydrid und/oder Epoxigruppen. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden (z.B. Emulsionspolymerisation, Suspensionspolymerisation, Lösungspolymerisation, Gasphasenpolymerisation).

Die optionale Zugabe von Füll- und/oder Verstärkungsstoffen (F) und weiteren Zusatzstoffen (Z) kann zu jeden Schritt des Herstellungsprozesses der Zusammensetzung (C) erfolgen, beispielsweise vor oder zusammen mit der Zugabe an Katalysator (K) und/oder Aktivator (A).

Die vorliegende Beschreibung bezieht sich weiterhin auf die Verwendung einer Zusammensetzung (C) erhältlich durch ein oben beschriebenes erfindungsgemäßes Verfahren zur Herstellung eines Polyamid-Formteils.

Die vorliegende Erfindung betrifft ein Verfahren zur Herstellung eines Gusspolyamid-Formteils durch anionische Polymerisation, wobei zur Polymerisation mindestens ein Monomer (M1), wobei es sich bei dem Monomer (M1) um ein cyclisches Lactam handelt, verwendet wird, das vor Beginn der Polymerisation mit mindestens einem Additiv (X1) zu einem Granulat verarbeitet wurde, und wobei dann das mindestens ein Monomer (M1) enthaltende Granulat zur Polymerisation gebracht wird, wobei die Mischung aus Monomer (M1) mit Additiv (X1) in fester Form vor der Polymerisation mit mindestens einem weiterem Monomer (M2), wobei es sich bei dem Monomer (M2) um ein cyclisches Lactam handelt, und mindestens einem weiteren Additiv (X2) oder mit mindestens einem weiteren Additive (X2) vermischt wird, wobei das mindestens eine Additiv (X1) und das weitere Additiv (X2) jeweils unabhängig voneinander ausgewählt sind aus der Gruppe umfassend Katalysatoren und Aktivatoren.

Dabei folgt in einer bevorzugten Ausführungsform der Erfindung der Schritt der Polymerisation des mindestens ein Monomer (M1) ausgewählt aus cyclischen Lactamen enthaltenden Granulats direkt auf die Herstellung des Granulats aus mindestens ein Monomer (M1) (einem cyclischen Lactam (M1)) und mindestens einem Additiv (X1). Die Herstellung des Granulats aus mindestens einem Monomer (M1) (ein cyclischen Lactam) und mindestens einem Additiv (X1) wird hierbei auch als "Konfektionierung" bzw. "Vorkonfektionierung" bezeichnet.

Das mit mindestens einem Additiv (X1) versehene mindestens eine Monomer (M1) (ein cyclisches Lactam) kann somit direkt in einer Lactam-Fabrikationsanlage zu einem Granulat (oder vergleichbaren festen Partikeln) verarbeitet werden. Dieses Granulat kann dann vom Verarbeiter beispielsweise zur Herstellung eines Gusspolyamid-Formteils eingesetzt werden und muss, im Gegensatz zu den aus dem Stand der Technik bekannten Verfahren, nicht erneut mit Additiven versehen werden. Das Zumischen weiterer Additive bleibt aber weiterhin als Option erhalten.

Dabei sind mit dem Begriff "Granulat" auch andere "vorkonfektionierte" Partikel einer Größe zwischen 1 mm und 20 mm, bevorzugt einer mittleren Größe von 2 bis 15 mm und besonders bevorzugt Teilchen einer mittleren Größe von 4 mm bis 10 mm, gemeint. Dabei können die Teilchen verschieden Formen haben. Sie können beispielsweise tonnenförmig, kugelförmig oder auch schuppenförmig sein.

Erfindungsgemäß sind das mindestens eine Additiv (X1) und das weitere Additiv (X2) jeweils unabhängig voneinander ausgewählt aus der Gruppe umfassend Katalysatoren und Aktivatoren. Als Katalysatoren (K) und Aktivatoren (A) können die weiter oben im Zusammenhang mit dem Verfahren zur Herstellung einer Zusammensetzung (C) genannten Verbindungen Verwendung finden.

Weitere Gegenstände der vorliegenden Beschreibung sind auch ein Gusspolyamid-Formteil, herstellbar nach dem erfindungsgemäßen Verfahren, sowie eine feste Caprolactam-Zubereitung, die mindestens ein Additiv (X1) in Mengen < 90 Gew.-%, bevorzugt < 60 Gew.-% und besonders bevorzugt < 40 Gew.-% enthält.

Lactame, wie bspw. ε(epsilon)-Caprolactam, können während der Konfektionierung auf einfache Art mit Additiven und/oder Zusatzstoffen (Z) versehen werden, beispielsweise mit den oben genannten Zusatzstoffen (Z), Katalysatoren (K) und Aktivatoren (A), insbesondere mit Farbstoffen, Trocknungsmitteln, Aktivatoren oder Katalysatoren, Kettenverlängeren, Stabilisatoren oder Schlagzähmodifizierern.

Man kann ebenso andere Zusammensetzungen wählen, beispielsweise eine vorkonfektionierte Aktivator- sowie Katalysatorschmelze zu einer Lactamschmelze dosieren, zu der in einem weiteren Schritt auch weitere Additive gegeben werden können.

In einer bevorzugten Ausführungsform des erfindungsgemäßen Verfahrens erfolgt die Verarbeitung des mindestens einen Monomers (M1) ausgewählt aus mindestens einem cyclischen Lactam mit dem mindestens einem Additiv (X1) zu einem Granulat durch Mischen der Komponenten in trockenem Zustand.

Häufig wird die anionische Polymerisation z. B. so ausgeführt, dass man jede Monomer-Komponente (normalerweise 2 Komponenten (M1) und (M2)) unter Feuchtigkeitsausschluss aufschmilzt, in eine Komponente Katalysator (z. B. Lactamat) und in eine andere Komponente den Aktivator (z. B. Isocyanatderivat) gibt, und dann unter Rühren mit einem normalen Rührwerk oder einer geeigneten Mischmaschine die beiden Komponenten vermischt. Dabei können auch weitere Zusatzstoffe zugegeben werden, beispielsweise 3 bis 50 Gew.-%, bevorzugt 8 bis 18 Gew.-% Schlagzähmodifizierer, Stabilisatoren, Flammschutzmittel oder andere Additive.

Die Gusspolymerisationsapparatur sollte bevorzugt für jede Schmelze einzeln einen Schmelzkreislauf bis zum Gusskopf besitzen, durch den die Schmelze in den Schläuchen und Leitungen durch ständiges Umpumpen in Bewegung gehalten wird. Für die Ausführung des erfindungsgemäßen Verfahrens ist dieser Kreislauf jedoch nicht zwingend notwendig.

Als Monomere (M1) und/oder (M2) kommen die oben unter den Monomere (M) genannten cyclische Lactame, bevorzugt cyclische Lactame mit 6 bis 16 C-Atomen in Frage, insbesondere bevorzugt Laurinlactam und besonders bevorzugt ε(epsilon)-Caprolactam. Dabei kann das Monomer (M1) und das Monomer (M2) gleich oder verschieden sein.

Ebenso kann das Additiv (X1) und das Additiv (X2) gleich oder verschieden sein.

Es können auch zusätzlich Zusatzstoffe (Z) wie oben beschrieben verwendet werden. Insbesondere können oben genannte Füll- und/oder Verstärkungsstoffe (F) verwendet werden, wobei die Füll- und/oder Verstärkungsstoffe (F) jeweils unabhängig voneinander vor der Polymerisation als weiteres Additiv oder während der Polymerisation zugegeben werden.

Es können Füll- und/oder Verstärkungsstoffe (F) wie oben beschrieben verwendet werden. Bevorzugt werden die Füll- und/oder Verstärkungsstoffe (F) ausgewählt aus der Gruppe umfassend Mineralien in für Thermoplastanwendungen üblicher Korngröße wie beispielsweise Kaolin, Kreide, Wollastonit oder Talkum, Kohlenstoff- oder Glasfasern, z. B. gemahlene Glasfasern und auch textile Strukturen (Gewebe und Gelege) aus unidirektionalen Fasern, bevorzugt Glas- und Kohlenstofffasern. Als Schlichte für die Füll- oder Verstärkungsstoffe kann die gleiche Schlichte wie für den Einsatz im thermoplastisch zu verarbeitenden Polyamid verwendet werden.

Als Katalysator (K) kann mindestens eine der oben in Bezug zur Komponente (K) genannten Verbindungen eingesetzt werden. Bevorzugt handelt es sich um ein Alkali- oder Erdalkalilactamat, bevorzugt als Lösung in Lactam, besonders bevorzugt Natriumcaprolactamat in ε(epsilon)-Caprolactam.

Als Aktivator (A) kann mindestens eine der oben in Bezug zur Komponente (A) genannten Verbindungen eingesetzt werden. Bevorzugt handelt es sich beim Aktivator (A) um N-Acyllactame oder Säurechloride oder, bevorzugt, um aliphatische Isocyanate, besonders bevorzugt Oligomere des Hexamethylendiisocyanats. Als Aktivator (A) kann sowohl die Reinsubstanz wie auch bevorzugt eine Lösung, beispielsweise in N-Methylpyrrolidon, dienen.

Weitere Zusatzstoffe (Z) und/oder Additive (X) können die weiter oben im Zusammenhang mit dem Verfahren zur Herstellung einer Zusammensetzung (C) genannten Zusatzstoffe (Z) sein. Beispielsweise handelt es sich bei den Zusatzstoffen (Z) um Schlagzähmodifikatoren, Flammschutzmittel, Nukleierungshilfsmittel, Farbstoffe, Füllöle, Stabilisatoren, Oberflächenverbesserer, Sikkative und Entformungshilfsmittel sein.

Bevorzugte Ausführungsformen der Beschreibung sind auch ungefüllte, gefüllte und/oder verstärkte Polyamidkompositionen, hergestellt durch anionische Polymerisation einer Mischung (Zusammensetzung (C)) enthaltend (oder bestehend aus):
a) 10 bis 95 Gew.% mindestens eines Monomers (M) ausgewählt aus Lactamen und Lactonen; bevorzugt 40 bis 95 Gew.-% cyclisches Lactam mit 6 bis 15 Kohlenstoffatomen im Ring, bevorzugt Laurinlactam und besonders bevorzugt ε(epsilon)-Caprolactam, oder Mischungen dieser Lactame,
b) 0,8 bis 8 Gew-% Katalysator (K), bevorzugt eine Mischung von etwa 15 bis 20 Gew.-% Lactamat-Salz, darunter bevorzugt Natriumlactamat, in ε(epsilon)-Caprolactam,
c) 0,5 bis 5 Gew.-% Aktivator (A), bevorzugt aliphatische Isocyanate oder N-Acyllactame,
d) 1 bis 90, bevorzugt 1 bis 88 Gew.-%, bevorzugt 1 bis 50 Gew.-%, bevorzugt 3 bis 30 Gew.-%, besonders bevorzugt 5 bis 15 Gew.-% Füll- und/oder Verstärkungsstoffe (F), bevorzugt Glasfasern, darunter Kurzglasfasern, gemahlene Kohlenstofffasern und Textilien aus Glas- und Kohlestofffasern,
e) 0 bis 20 Gew-% andere Additive und/oder Zusatzstoffe (Z) wie beispielsweise Schlagzähmodifikatoren, Flammschutzmittel, Nukleierungshilfsmittel, Farbstoffe, Füllöle, Stabilisatoren, Oberflächenverbesserer, Sikkative oder Entformungshilfsmittel.

Dabei werden eine oder mehrere der Komponenten b), c) und d) schon bei der Konfektionierung in das cyclische Lactam a) eingearbeitet, was Vorteile bei der Verarbeitung dieser Lactame zu Polyamiden bietet.

In einer bevorzugten Ausführungsform bezieht sich die vorliegende Beschreibung auf ein Verfahren zur Herstellung eines Polyamid-Formteils, wobei eine Zusammensetzung (C) erhältlich (oder erhalten) durch ein oben beschriebenes Verfahren (Verfahren zur Herstellung einer Zusammensetzung (C)) durch Erwärmen auf eine Temperatur von 120 °C bis 250°C polymerisiert wird.

Generell ist es vorteilhaft, Verunreinigungen, wie z.B. Wasser, Kohlendioxid und Sauerstoff, welche zu einem Abbruch der anionischen Polymerisation führen können, so gering wie möglich zu halten. Daher sollten insbesondere alle eingesetzten Komponenten trocken und frei von Sauerstoff und Kohlendioxid sein. Bevorzugt wird die Polymerisation unter weitgehendem Ausschluss von Sauerstoff, Kohlendioxid und Wasser durchgeführt.

Insbesondere bezieht sich die vorliegende Beschreibung auf ein Verfahren zur Herstellung eines Polyamid-Formteils, wie oben angegeben, umfassend die folgenden Schritte:
i) Schmelzen der Zusammensetzung (C) bei einer Temperatur von 50 °C bis 200°C; insbesondere von 50 °C bis 160 °C, bevorzugt von 50 °C bis 100 °C;
j) Einfüllen der geschmolzenen Zusammensetzung (C) in eine Werkzeugkavität;
k) Polymerisation der Zusammensetzung (C) durch Erwärmen auf eine Temperatur von 120 bis 250°C.

Das Schmelzen der Zusammensetzung (C) erfolgt bevorzugt bei einer Temperatur größer oder gleich der Schmelztemperatur des eingesetzten Monomers (M) bzw. der eingesetzten Monomere (M) und unter einer Temperatur von unter 160 °C, bevorzugt unter 150 °C, bevorzugt unter 120 °C, insbesondere bevorzugt unter 100 °C, weiterhin bevorzugt unter 90 °C. Der ausgewählte Temperaturbereich in Schritt a) hängt somit von der Auswahl des Monomers (M) bzw. der Monomere (M) ab.

Die geschmolzene Zusammensetzung (C) kann mittels eines geeigneten Formgebungsverfahrens (z.B. Spritzguss, Gussverfahren) in eine Werkzeugkavität gefüllt und dort durch Erhöhung der Temperatur polymerisiert werden.

Bevorzugt ist ein Verfahren zur Herstellung eines Polyamid-Formteils wie oben angegeben, wobei die Werkzeugkavität vor dem Einfüllen der geschmolzenen Zusammensetzung mindestens einen Füll- und/oder Verstärkungsstoff (F) enthält. In einer bevorzugten Ausführungsform enthält die Werkzeugkavität ein Fasergewebe und/oder ein Fasernetz, beispielsweise eine Glasfasermatte und/oder ein Glasfasernetz.

Es ist weiterhin möglich einen Füll- und/oder Verstärkungsstoff (F) zusammen mit der geschmolzenen Zusammensetzung (C) in die Werkzeugkavität einzufüllen. Dies kann mittels bekannter Verfahren (beispielsweise in einer Spritzgussvorrichtung oder Formgussvorrichtung) erfolgen. Der optional zugegebene Füll- und/oder Verstärkungsstoff (F) kann aus den oben im Zusammenhang mit dem Verfahren zur Herstellung einer Zusammensetzung (C) genannten Füll- und/oder Verstärkungsstoffen (F) ausgewählt werden.

Mit Hilfe des erfindungsgemäßen Verfahrens ist es möglich Polyamid-Formteile mit einem hohen Anteil an Füll- und/oder Verstärkungsstoffen (F) herzustellen. Insbesondere bezieht sich die Erfindung auf ein Verfahren wie oben beschrieben, dadurch gekennzeichnet, dass das Polyamid-Formteil einen Füll- und/oder Verstärkungsstoffanteil im Bereich von 30 bis 90 Gew.-%, insbesondere von 30 bis 80 Gew.-%, bevorzugt 30 bis 50 Gew.-%, weiterhin bevorzugt von 50 bis 90 Gew.-% aufweist. Die Angaben in Gew.-% beziehen sich auf das Gesamtgewicht des Polyamid-Formteils.

Weiterhin bezieht sich die vorliegende Beschreibung auf die Verwendung einer Zusammensetzung (C) erhältlich durch ein Verfahren wie oben beschrieben zur Herstellung eines Polyamid-Formteils, insbesondere eines füllstoffhaltigen und/oder faserverstärkten Formteils. Insbesondere weist das Polyamid-Formteil einen Füll- und/oder Faserstoffanteil im Bereich von 30 bis 90 Gew.-% auf.

Weiterhin bezieht sich die vorliegende Beschreibung auf ein Polyamid-Formteil, insbesondere ein Gusspolyamid-Formteil, herstellbar nach dem erfindungsgemäßen Verfahren.

Die mit dem erfindungsgemäßen Verfahren hergestellten Polyamid-Formteile können insbesondere Anwendung finden als Material zur Herstellung von Teilen der Autokarosserie, z.B. Fahrgastzelle, Kotflügel, als auch von Autoteilen, wie Verkleidungen von Rahmen, Armaturenbrettern und für den Innenraum von Fahrgastzellen. Die Polyamid-Formteile können ferner eingesetzt werden als Inliner für Tanks, Zahnräder, Gehäuse Verpackungsfilme und Beschichtungen.

Prinzipiell eignen sich die mit dem erfindungsgemäßen Verfahren hergestellten Polyamid-Formteile für jegliche Gehäuse für elektrische Kleingeräte, wie Mobiltelefone, Laptops, iPads oder allgemein Kunststoffartikel, die Metall imitieren sollen.

Die Erfindung wird durch die nachfolgenden Beispiele näher erläutert.

### Beispiel 1 (Referenzbeispiel)

834 g/h (7062 mmol/h) ε(epsilon)-Caprolactam, 115 g/h (144 mmol/h) Katalysator Bruggolen® C 10 (17 % w/w ε(epsilon)-Caprolactamat in ε(epsilon)-Caprolactam) und 51 g/h (14 mmol/h) Initiator Bruggolen® C 20 (80 % w/w blockiertes Diisocyanat in ε-Caprolactam) wurden in einem Extruder PTW 16, 130 Upm, Düse 2 mm, 1,0 kg/h, bei 70°C gemischt. Die Mischung wurde durch einen kalten Gasstrom (coldfeed 0°C) abgekühlt. Die Mischung wurde bei Raumtemperatur unter Stickstoff granuliert.

Eine Woche später wurde das so erhaltene Caprolactam-Granulat bei einer Produkttemperatur von 80°C in einer Spritzgussmaschine Arburg 270 S mit vertikal angeordneter Spritzeinheit spritzgegossen. Das Temperaturprofil des Zylinders betrug 60 °C / 65 °C/ 70 °C / 75 °C. Die Einspritzzeit betrug 0,8 s, die Nachdruckzeit betrug 2 s. Die Schmelze wurde in eine Form mit 150°C Werkzeug-Temperatur injiziert. Danach wurde die Polymerisation 5 Minuten fortschreiten gelassen. Das erhaltene Polyamid-Formteil wurde aus dem Werkzeug entnommen.

Der Gehalt an Restmonomer (Caprolactam) des Polyamid-Produktes wurde chromatographisch bestimmt. Die Viskositätzahl des Polyamid-Produktes wurde gemäß der ISO 307 bei 5 °C in 96 %iger Schwefelsäure bestimmt. Das erhaltene Polymer enthielt 0,9 Gew.-% Rest Caprolactam und wies eine Viskositätszahl von 195 auf.

### Beispiel 2 (Referenzbeispiel)

834 g/h (7062 mmol/h) ε(epsilon)-Caprolactam, 3000 g/h Glaskugeln, 115 g/h (144 mmol/h) Katalysator Bruggolen® C 10 (17 % w/w ε(epsilon)-Caprolactamat in ε-Caprolactam) und 51 g/h (14 mmol/h) Initiator Bruggolen® C 20 (80 % w/w blockiertes Diisocyanat in ε(epsilon)-Caprolactam) wurden in einem Extruder PTW 16, 130 Upm, Düse 2 mm, 3,0 kg/h, bei 70°C gemischt. Die Mischung wurde durch einen kalten Gasstrom (coldfeed 0°C) gekühlt.

Die Mischung wurde bei Raumtemperatur unter Stickstoff granuliert.

Eine Woche später wurde das so erhaltene Caprolactam-Granulat bei einer Produkttemperatur von 80°C spritzgegossen. Die Schmelze wurde bei T = 150°C in eine Werkzeugkavität injiziert. Danach wurde die Polymerisation 5 Minuten fortschreiten gelassen. Das erhaltene Polyamid-Formteil wurde aus dem Werkzeug entnommen. Das erhaltene Polymer enthielt 1,5 Gew.-% Rest-Caprolactam und wies eine Viskositätszahl von 230 auf.

### Beispiel 3 (Referenzbeispiel)

Die gemäß Beispiel 1 hergestellt Monomerzusammensetzung wurde einen Monat gelagert. Danach wurde die Polymerisation wie in Beispiel 1 beschrieben ausgeführt. Das erhaltene Polyamid enthielt einen Restmonomergehalt von 0,95 Gew.-% Caprolactam und wies eine Viskositätszahl von 191 auf.

Es konnte also gezeigt werden, dass die mittels des erfindungsgemäßen Verfahrens hergestellten Monomer-Zusammensetzungen über einen langen Zeitraum stabil sind, d.h. auch nach einer langen Zeit noch vollständig polymerisiert werden können.

### Beispiel 4 (Referenzbeispiel)

Es wurde eine Zusammensetzung wie in Beispiel 1 angegeben hergestellt, wobei die Vermischung des ε-Caprolactam, des Katalysator und des Initiators in einem Rundkolben unter Verwendung eines magnetischen Rührers durchgeführt wurden. Die Komponenten wurden in einer Glovebox (Schutzkammer) unter trockenem Stickstoff in den Kolben gegeben. Nach der Herstellung der Zusammensetzung wurde die Öffnung des Kolbens versiegelt und aus der Glovebox entfernt. Die Zusammensetzung wurde in einem Eisbad abgekühlt.

Die Zusammensetzung wurde dann für eine Woche bei Raumtemperatur gelagert. Danach wurde die Polymerisation bei einer Temperatur von 150 °C für 10 min durchgeführt. Das Polyamid-Produkt wies einen Gehalt an Caprolactam-Restmonomer von 0,85 Gew.-% und eine Viskositätzahl von 200 auf.

### Beispiele 5.1 bis 5.8:

Für die folgenden Beispiele 5.1 bis 5.8 diente als Katalysator eine Lösung von Natriumlactamat in ε(epsilon)-Caprolactam (Katalysator Addonyl® NL, Firma Rhein Chemie), der Aktivator war ein Oligomeres aus Hexamethylendiisocyanat, gelöst in N-Methylpyrrolidon (Addonyl® 8108, Firma Rhein Chemie).

Die Komponenten wurden unter trockenem Stickstoff aufgeschmolzen und dann für 30 Sekunden in einem auf 100°C thermostatisierten Glasbehälter unter trockenem Stickstoff gerührt. Die mit den Additiven vermischte ε(epsilon)-Caprolactamschmelze wurde gravimetrisch in eine auf 150°C beheizte Stahlform eingetragen. Entformt wurde nach 5 Minuten. Bewertet wurden die Form und das Aussehen des Formteils sowie der Gehalt an Restmonomeren (ε(epsilon)-Caprolactam). Die in den Vergleichsbeispielen eingesetzten Caprolactam-Zubereitungen wurden getrennt unter trockenem Schutzgas hergestellt und in wasserdichten Kunststoffbehältern gelagert.

### Vergleichsbeispiel 5.1

Es wurden die folgenden Zusammensetzungen hergestellt:
Katalysatorschmelze: In eine Mischung aus 100 g bei 90°C aufgeschmolzenes ε(epsilon)-Caprolactam der BASF SE wurden 1,5 g Katalysator unter Schutzgas eingerührt.
Aktivatorschmelze: In eine Mischung aus 100,0 g ε(epsilon)-Caprolactam wurden bei 90°C 1,0 g Aktivator unter Schutzgas eingerührt.

Beide Schmelzen wurden in einem auf 90°C beheizten Kolben unter trockenem Stickstoff durch Rühren (30 Sekunden) innig vermischt und gravimetrisch in das auf 150°C vorgeheizte Stahlwerkzeug gegossen. Nach 5 Minuten wurde entformt. Man erhielt einen homogenen Block.

Aussehen: gut, Restcaprolactam 1,1 %

### Vergleichsbeispiel 5.2: Zugabe von Kurzglasfasern

Es wurde eine Katalysatorschmelze wie unter Beispiel 5.1 beschriebenen hergestellt.

Aktivatorschmelze: In eine Mischung aus 100,0 g ε(epsilon)-Caprolactam wurden bei 90°C 1,0 g Aktivator und 40 g handelsübliche Kurzglasfasern mit Schlichte für Polyamide (Firma OCV) unter Schutzgas eingerührt.

Beide Schmelzen wurden in einem auf 90°C beheizten Kolben unter trockenem Stickstoff durch Rühren (30 Sekunden) innig vermischt und gravimetrisch in das auf 150°C vorgeheizte Stahlwerkzeug gegossen. Nach 5 Minuten wurde entformt. Man erhielt einen homogenen Block.

Aussehen: gut, Rest-Caprolactam 3,6 %, Geruch nach Caprolactam

### Vergleichsbeispiel 5.3: kein Wasserausschluss

Es wurde eine Katalysatorschmelze wie unter Beispiel 5.1 beschriebenen hergestellt.

Aktivatorschmelze: In eine Mischung aus 100,0 g ε(epsilon)-Caprolactam wurden bei 90°C 1,0 g Aktivator eingerührt.

Beide Schmelzen wurden in einem auf 90°C beheizten Kolben durch Rühren (5 Sekunden) innig vermischt und gravimetrisch in das auf 150°C vorgeheizte Stahlwerkzeug gegossen.

Es wurde nicht unter trockenem Schutzgas (Stickstoff) gearbeitet. Nach 5 Minuten wurde entformt. Man erhielt einen homogenen Block.

Aussehen: schlecht (Schlieren, Verfärbung), Restcaprolactam 5,1 %, Geruch nach Caprolactam

### Vergleichsbeispiel 5.4 : Zugabe von Kurzglasfasern und kein Wasserausschluss

Es wurde eine Katalysatorschmelze wie unter Beispiel 5.1 beschriebenen hergestellt.

Aktivatorschmelze: In eine Mischung aus 100,0 g ε(epsilon)-Caprolactam wurden bei 90°C 1,0 g Aktivator und 40 g handelsübliche Kurzglasfasern mit Schlichte für Polyamide (Firma OCV) eingerührt.

Beide Schmelzen wurden in einem auf 90°C beheizten Kolben durch Rühren (5 Sekunden) innig vermischt und gravimetrisch in das auf 150°C vorgeheizte Stahlwerkzeug gegossen. Es wurde nicht unter trockenem Schutzgas (Stickstoff) gearbeitet. Nach 5 Minuten wurde entformt. Man erhielt einen homogenen Block.

Aussehen: sehr schlecht (Schlieren, Gelbfärbung), Restcaprolactam 8,7 %, starker Geruch nach Caprolactam.

### Beispiel 5.5

101,5 g festes schuppenförmiges ε(epsilon)-Caprolactam, das schon 1,5 g Katalysator enthielt, wurde mit 101,0 g festem ε(epsilon)-Caprolactam, das schon 1,0 g Aktivator enthielt, unter Schutzgas vermischt, aufgeschmolzen und 5 Sekunden gerührt.

Die Schmelze wurde bei 90°C in das auf 150°C vorgeheizte Stahlwerkzeug gegossen. Nach 5 Minuten wurde entformt. Man erhielt einen homogenen Block.

Aussehen: gut, Restcaprolactam 1,1 %

### Beispiel 5.6: Zugabe von Kurzglasfasern bei Konfektionierung

101,5 g festes schuppenförmiges ε(epsilon)-Caprolactam, das schon 1,5 g Katalysator enthielt, wurde mit 141,0 g festen ε(epsilon)-Caprolactam, das schon 1,0 g Aktivator und 40 g handelsübliche Kurzglasfasern mit Schlichte für Polyamide (Firma OCV) vermischt enthielt, aufgeschmolzen und 5 Sekunden gerührt.

Die Schmelze wurde bei 90°C in das auf 150°C vorgeheizte Stahlwerkzeug gegossen. Nach 5 Minuten wurde entformt. Man erhielt einen homogenen Block.

Aussehen: gut, Restcaprolactam 1,2 %

### Beispiel 5.7: Zugabe von Kurzglasfasern vor der Verarbeitung

101,5 g festes schuppenförmiges ε(epsilon)-Caprolactam, das schon 1,5 g Katalysator enthielt, wurde mit 101,0 g festen ε(epsilon)-Caprolactam, das schon 1,0 g Aktivator enthielt und 40 g handelsübliche Kurzglasfasern mit Schlichte für Polyamide (Firma OCV) vermischt, aufgeschmolzen und 5 Sekunden gerührt.

Die Schmelze wurde bei 90°C in das auf 150°C vorgeheizte Stahlwerkzeug gegossen. Nach 5 Minuten wurde entformt. Man erhielt einen homogenen Block.

Aussehen: gut, Restcaprolactam 1,6 %

### Beispiel 5.8: (nur 1 Komponente):

202,5 g festes schuppenförmiges ε(epsilon)-Caprolactam, das schon 1,5 g Katalysator und 1,0 g Aktivator wurde unter Schutzgas aufgeschmolzen und nicht gerührt.

Die Schmelze wurde bei 90°C in das auf 150°C vorgeheizte Stahlwerkzeug gegossen. Nach 5 Minuten wurde entformt. Man erhielt einen homogenen Block.

Aussehen: gut, Restcaprolactam 1,0 %

Die Beispiele und Vergleichsbeispiele 5.1 bis 5.8 zeigen, dass durch das erfindungsgemäße Verfahren bessere Polyamidformteile mit weniger Aufwand hergestellt werden können.

Das erfindungsgemäße Verfahren liefert auch vom Aussehen her bessere Produkte; zudem kann zumeist der Geruch deutlich vermindert werden. Letzterer Aspekt kann mit einem geringeren Restgehalt an nicht umgesetzten Monomeren erklärt werden.

## Patentansprüche

1. Verfahren zur Herstellung eines Gusspolyamid-Formteils durch anionische Polymerisation, bei dem zur Polymerisation mindestens ein Monomer (M1), wobei es sich bei dem Monomer (M1) um ein cyclisches Lactam handelt, verwendet wird, das vor Beginn der Polymerisation mit mindestens einem Additiv (X1) zu einem Granulat verarbeitet wurde, und bei dem dann das mindestens ein Monomer (M1) enthaltende Granulat zur Polymerisation gebracht wird, wobei die Mischung aus Monomer (M1) mit Additiv (X1) in fester Form vor der Polymerisation mit mindestens einem weiterem Monomer (M2), wobei es sich bei dem Monomer (M2) um ein cyclisches Lactam handelt, und mindestens einem weiteren Additiv (X2) oder mit mindestens einem weiteren Additiv (X2) vermischt wird, wobei das mindestens eine Additiv (X1) und das weitere Additiv (X2) jeweils unabhängig voneinander ausgewählt sind aus der Gruppe umfassend Katalysatoren und Aktivatoren.

2. Verfahren zur Herstellung eines Polyamid-Formteils gemäß Anspruch 1, wobei das mindestens eine Monomer (M1) und das optionale weitere Monomer (M2) jeweils unabhängig voneinander ausgewählt sind aus der Gruppe umfassend Lactame mit 6 bis 16 Kohlenstoffatomen im Ring.

3. Verfahren zur Herstellung eines Polyamid-Formteils gemäß einem der Ansprüche 1 oder 2, wobei das mindestens eine Monomer (M1) und das optionale weitere Monomer (M2) jeweils ε-Caprolactam ist.

4. Verfahren zur Herstellung eines Polyamid-Formteils gemäß einem der Ansprüche 1 bis 3, wobei die Verarbeitung des mindestens einen Monomers (M1) mit dem mindestens einem Additiv (X1) zu einem Granulat durch Mischen der Komponenten in trockenem Zustand erfolgt.

5. Verfahren zur Herstellung eines Polyamid-Formteils gemäß einem der Ansprüche 1 bis 4, wobei zusätzlich Verstärkungs- und/oder Füllstoffe (F) verwendet werden, wobei die Verstärkungs- und/oder Füllstoffe (F) jeweils unabhängig voneinander vor oder während der Polymerisation zugegeben werden.

6. Verfahren zur Herstellung eines Polyamid-Formteils gemäß einem der Ansprüche 1 bis 5, **dadurch gekennzeichnet, dass** das Polyamid-Formteil einen Füll- und/oder Verstärkungsstoffanteil im Bereich von 30 bis 90 Gew.-% aufweist.

## Claims

1. A process for producing a cast polyamide molding via anionic polymerization, where the polymerization process uses at least one monomer (M1), where the monomer (M1) is a cyclic lactam and, prior to the start of the polymerization process, has been processed with at least one additive (X1) to give pellets, and where the pellets comprising the at least one monomer (M1) are then polymerized, where the mixture made of monomer (M1) with additive (X1) is mixed in solid form prior to the polymerization process with at least one further monomer (M2), where the monomer (M2) is a cyclic lactam, and with at least one further additive (X2), or with at least one further additive (X2), where the at least one additive (X1) and the further additive (X2) are respectively mutually independently selected from the group comprising catalysts and activators.

2. The process for producing a polyamide molding according to claim 1, where the at least one monomer (M1) and the optional further monomer (M2) have respectively been selected mutually independently from the group comprising lactams having from 6 to 16 carbon atoms in the ring.

3. The process for producing a polyamide molding according to either of claims 1 and 2, where the at least one monomer (M1) and the optional further monomer (M2) are respectively ε-caprolactam.

4. The process for producing a polyamide molding according to any of claims 1 to 3, where the processing of the at least one monomer (M1) with the at least one additive (X1) to give pellets takes place via mixing of the dry components.

5. The process for producing a polyamide molding according to any of claims 1 to 4, where reinforcing materials and/or fillers (F) are additionally used, where the reinforcing materials and/or fillers (F) are respectively mutually independently added before or during the polymerization process.

6. The process for producing a polyamide molding according to any of claims 1 to 5, wherein the content of filler and/or of reinforcing material in the polyamide molding is in the range from 30 to 90% by weight.

## Revendications

1. Procédé pour la fabrication d'une pièce moulée en polyamide coulé par polymérisation anionique, selon lequel au moins un monomère (M1) est utilisé pour la polymérisation, le monomère (M1) consistant en un lactame cyclique, qui a été transformé en un granulat avant le début de la polymérisation avec au moins un additif (X1), et selon lequel le granulat contenant au moins un monomère (M1) est ensuite amené à la polymérisation, le mélange du monomère (M1) avec l'additif (X1) étant mélangé sous forme solide avant la polymérisation avec au moins un monomère supplémentaire (M2), le monomère (M2) consistant en un lactame cyclique, et au moins un additif supplémentaire (X2) ou avec au moins un additif supplémentaire (X2), l'au moins un additif (X1) et l'additif supplémentaire (X2) étant chacun choisis indépendamment l'un de l'autre dans le groupe comprenant les catalyseurs et les activateurs.

2. Procédé pour la fabrication d'une pièce moulée en polyamide selon la revendication 1, dans lequel ledit au moins un monomère (M1) et le monomère supplémentaire optionnel (M2) sont chacun choisis indépendamment l'un de l'autre dans le groupe comprenant les lactames contenant 6 à 16 atomes de carbone dans le cycle.

3. Procédé pour la fabrication d'une pièce moulée en polyamide selon l'une quelconque des revendications 1 et 2, dans lequel ledit au moins un monomère (M1) et le monomère supplémentaire optionnel (M2) sont chacun l'ε-caprolactame.

4. Procédé pour la fabrication d'une pièce moulée en polyamide selon l'une quelconque des revendications 1 à 3, dans lequel la transformation dudit au moins un monomère (M1) avec ledit au moins un additif (X1) en un granulat a lieu par mélange des composants à l'état sec.

5. Procédé pour la fabrication d'une pièce moulée en polyamide selon l'une quelconque des revendications 1 à 4, dans lequel des matières de renforcement et/ou des charges (F) sont en outre utilisées, les matières de renforcement et/ou les charges (F) étant ajoutées chacune indépendamment les unes des autres avant ou pendant la polymérisation.

6. Procédé pour la fabrication d'une pièce moulée en polyamide selon l'une quelconque des revendications 1 à 5, **caractérisé en ce que** la pièce moulée en polyamide présente une proportion de charges et/ou de matières de renforcement dans la plage allant de 30 à 90 % en poids.
